**Europäisches Patentamt**

**European Patent Office**

**Office européen des brevets**

(19)

(11) Numéro de publication : **0 448 521 A1**

(12) **DEMANDE DE BREVET EUROPEEN**

(21) Numéro de dépôt : **91830080.7**

(22) Date de dépôt : **07.03.91**

(51) Int. Cl.⁵ : **G06F 15/02**

(30) Priorité : **21.03.90 IT 1157190 U**

(43) Date de publication de la demande :
**25.09.91 Bulletin 91/39**

(84) Etats contractants désignés :
**DE ES FR GB IT**

(71) Demandeur : **Maffei, Carlo**
**Via Maestrale 10 bis**
**I-51100 Pistoia (IT)**

(72) Inventeur : **Maffei, Carlo**
**Via Maestrale 10 bis**
**I-51100 Pistoia (IT)**

(74) Mandataire : **Martini, Lazzaro**
**Ufficio Brevetti Ing. Lazzaro Martini Via dei**
**Rustici 5**
**I-50122 Firenze (IT)**

(54) **Machine à calculer pour des valeurs de posologie.**

(57)   Pour calculer des valeurs de posologie, en particulier de médicaments, de composition des aliments, de composition de diètes, indices et équivalents pour usage médical et similaires sans tenir compte des symboles mathématiques on utilise una machine à calculer électronique classique à usage mathématique sur laquelle les touches des opérations et des symboles numériques sont modifiées dans la forme, la couleur et la symbologie par rapport à celles habituelles de manière a représenter visuellement un guide pour effectuer les séquences de calcul programmées, sans tenir compte des opérations mathématiques nécessaires.

Fig. 2

EP 0 448 521 A1

La présente innovation concerne une machine à calculer pour des valeurs de posologie, en particulier de médicaments, de composition des aliments, de composition de diètes, indices et équivalents pour usage médical et similaires.

Il est connu d'utiliser, spécialement en médecine, en pharmacie et dans la science de l'alimentation, des formules mathématiques qui permettent de calculer la posologie de médicaments en fonction du poids corporel, de la surface corporelle ou de l'âge ou en fonction de rapports hématologiques (par exemple la dose d'insuline, qui dépend également, en plus du poids corporel, des valeurs glycémiques et du nombre d'heures après le repas), ou encore de calculer le poids idéal d'une personne ou ses besoins caloriques, ou encore de calculer la quantité de composants spécifiques (calcium, sodium, glycides, protides, lipides, etc.) contenus dans des quantités d'aliments déterminées, ou encore de calculer la quantité des différents aliments pour composer une diète en relation avec des exigences particulières requises par la diète elle-même pour des nécessités spécifiques (allaitement, sevrage, différentes périodes de la croissance et de la sénescence, diabète, hypertension, hypotension, hyperazotémie, obésité, dyslipémies en général, parmi lesquelles les hypercholestérolémies, les hypertriglycéridémies, plus ou moins associées ou combinées entre elles, diverses dysendocrinies telles que les troubles thyro diens, hypophysaires, surrénales, les cardiopathies en général, parmi lesquelles celles ischémiques, congestives, tout comme les hyperazotémies à pathogénie différente) ainsi que de déterminer la base à des données et des indices utilisés en médecine générale et spécialiste (tels que l'indice glycémiant, athérogénétique, de dyslipémie, etc.) en connaissant la quantité d'un certain aliment, la quantité équivalente d'un autre aliment en relation avec un problème spécifique. Par exemple relativement à l'indice glycémiant, trouver la quantité d'un aliment prédéterminé qui a la même action sur la glycémie que celle exercée par une quntité déterminée d'un aliment déterminé et pareillement pour l'indice athérogénétique, dyslipémique, hyperazotémique, hypercholestérolémique, etc. De même, on connaît la possibilité de déterminer, en fonction du contenu en calcium, sodium, phosphore, fer etc. ou encore en fonction du contenu de glucides, lipides, protides, cholestérol etc., les doses équivalentes de différents aliments qui contiennent la même quantité de la substance spécifique, ou encore, une fois calculé l'indice de risque athérogénétique, diabétique, cardiologique, hyperazotémique, etc. des différents aliments, de trouver leurs équivalents (par exemple une certaine quantité de sole avec risque athérogénétique calculé au moyen de la formule correspondante, correspond, en relation avec le risque athérogénétique, à une quantité déterminée de parmesan et ainsi de suite).

Habituellement, ces calculs sont effectués au moyens d'abaques et de tables ou encore au moyen de véritables instruments de calcul, même très simples, tels que des règle à calcul comportant des curseurs coulissants ou des disques concentriques rotatifs. Mais ces instruments s'avèrent peu précis pour celui qui ne sait pas bien les utiliser et, du fait qu'ils sont généralement réalisés en carton ou en matière plastique pour des raisons économiques, ils sont susceptibles de se détériorer rapidement ou d'être perdus; en outre, ils sont inadaptés pour des séquences de calcul complexes ou comprenant de nombreuses opérations.

Le but principal de la présente innovation est de faciliter au maximum les séquences d'opérations mathématiques, souvent nombreuses, nécessaires pour obtenir des données utiles telles que celles décrites ci-dessus et de fournir un instrument de grande précision, d'emploi extrêmement facile et rapide.

Ce résultat a été atteint conformément à l'innovation en adoptant l'idée d'utiliser une machine à calculer électronique classique à usage mathématique, sur laquelle les touches des opérations et des symboles numériques sont modifiées dans la forme, la couleur et la symbologie par rapport à celles habituelles, de manière à représenter visuellement un guide pour effectuer les séquences de calcul programmées, tout en laissant inchangée pour chaque touche la propre fonction mathématique.

Les avantages obtenus grâce à la présente innovation consistent essentiellement dans le fait qu'on dispose d'un instrument de calcul de grande précision et rapidité comme une machine à calculer électronique; que la séquence d'opérations mathématiques s'avère très pratique à effectuer grâce à la symbologie utilisée pour les touches en combinaison avec leur forme et leur couleur; qu'il est possible de regrouper plusieurs opérations mathématiques sur une seule touche, en accélérant au maximum le processus; que, si elle est pourvue d'une imprimante incorporée ou externe, elle permet d'écrire pour contrôler, conserver et archiver les calculs effectués; qu'une machine à calculer, conformément à l'innovation, peut être obtenue par simple modification ou adaptation des machines à calculer à usage mathématique classiques, en conservant intégralement leur propre circuit électronique.

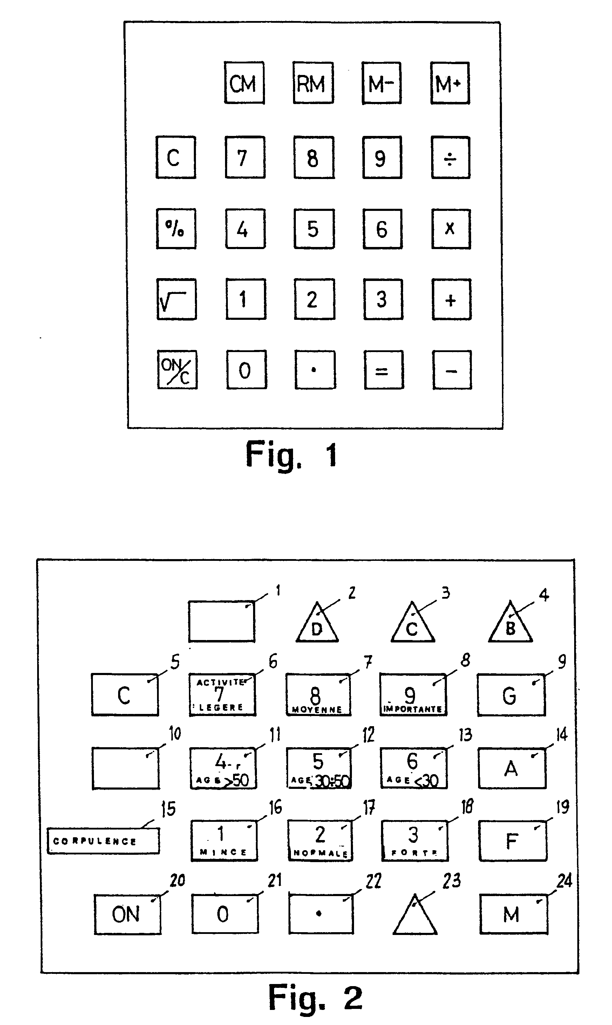

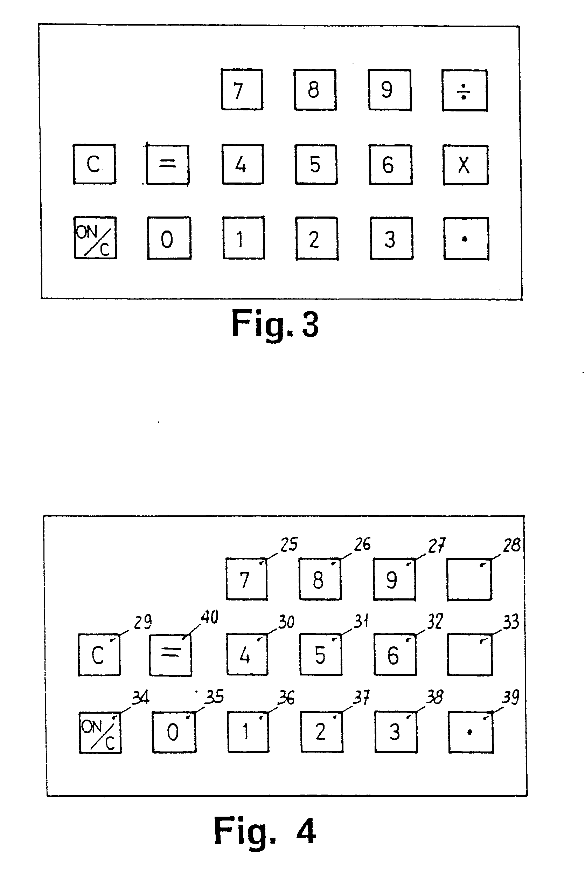

Ces avantages et caractéristiques ainsi que d'autres seront plus et mieux compris de chaque homme du métier à la lumière de la description qui va suivre et à l'aide des dessins annexés donnés à titre d'exemplification pratique du modèle, mais à ne pas considérer dans le sens limitatif; dessins sur lesquels: la FIG. 1 représente, schématiquement, le clavier d'une machine à calculer classique de type mathématique; la FIG. 2 représente, schématiquement, le clavier de la Fig. 1 modifié, conformément à l'innovation, pour obtenir des valeurs de posologie de médicaments, des compositions d'aliments dans les diètes, des indices à usage médical et similaires;la FIG. 3 représente, schématiquement, le clavier d'une machine à calculer à usage mathématique classique de type très simplifié; la FIG. 4 représente, schématiquement, le clavier de la Fig. 3 modifié conformément à l'innovation.

Réduite à sa forme essentielle, selon un mode de réalisation préféré et en référence à la Fig. 2 des dessins annexés, une machine à calculer pour valeurs de posologie, conformément à l'innovation, est constituée d'une machine à calculer électronique du type utilisé habituellement pour effectuer seulement des opérations mathématiques, dont le clavier est modifié de la manière suivante: la touche de mémoire est remplacée par une touche (1) de couleur noire; la touche de rappel de la mémoire est remplacée par une touche (2) de forme triangulaire, de couleur grise et portant le symbole D; la touche de soustraction de la mémoire est remplacée par une touche (3) de forme triangulaire, de couleur orange et portant le symbole C; la touche d'addition de la mémoire est remplacée par une touche (4) de forme triangulaire, de couleur marron et portant le symbole B; la touche du chiffre 7 est remplacée par une touche (6) portant, en plus du chiffre 7, l'inscription "activité légère"; la touche du chiffre 8 est remplacée par une touche (7) portant, en plus du chiffre 8, l'inscription "activité moyenne"; la touche du chiffre 9 est remplacée par une touche (8) portant, en plus du chiffre 9, l'inscription "activité importante"; la touche du signe de division est remplacée par une touche (9) de couleur verte portant le symbole G; la touche du symbole % est remplacée par une touche (10) non définie; la touche du chiffre 4 est remplacée par une touche (11) portant, en plus du chiffre 4, l'inscription "âge 50"; la touche du chiffre 5 est remplacée par une touche (12) portant, en plus du chiffre 5, l'inscription "âge 30 - 50"; la touche du chiffre 6 est remplacée par une touche (13) portant, en plus du chiffre 6, l'inscription "âge 30"; la touche de la multiplication est remplacée par une touche (14) de couleur rouge portant le symbole A; la touche de la racine carrée est remplacée par l'inscription (15) "corpulence" sans touche; la touche du chiffre 1 est remplacée par une touche (16) portant, en plus du chiffre 1, l'inscription "mince"; la touche du chiffre 2 est remplacée par une touche (17) portant, en plus du chiffre 3, l'inscription "normale"; la touche du chiffre 3 est remplacée par une touche (18) portant, en plus du chiffre 3, l'inscription "forte"; la touche de l'addition est remplacée par une touche (19) de couleur bleue, avec le symbole F; la touche du signe égal est remplacée par une touche (23) de forme triangulaire, de couleur noire; la touche de la soustraction est remplacée par une touche (24) de couleur jaune, portant le symbole M.

Ci-après seront décrits quelques exemples d'utilisation pratique, en référence à la machine à calculer de la Fig. 2 des dessins annexés.

## Exemple n° 1

Calcul du poids corporel idéal. On l'obtient avec la séquence d'opérations suivante: après avoir allumé la machine à calculer avec la touche ON (20), on presse la touche noire (1), on tape la taille du sujet en centimètres en utilisant les touches numériques, on appuie sur la touche du A (14), on tape le nombre 0,72 si le sujet est un homme ou 0,65 si c'est une femme, on presse la touche triangulaire noire (23), puis la touche triangulaire marron du B (4), on tape le type de corpulence du sujet au moyen d'une des touches (16-18), on presse la touche rouge du A (14), taper le code 4,3 pour les hommes et 4,2 pour les femmes et ensuite on presse la touche (23) triangulaire noire (47); ensuite on appuie sur la touche marron du B (4), on tape le nombre 66, on presse la touche orange du C (3), la touche grise du D (2) et enfin on lit sur l'affichage la valeur correspondante. La séquence d'opérations mathématiques effectuées est la suivante: avec la touche (1) on remet la mémoire à zéro; en tapant la taille en cm, avec la touche (14) A on effectue la multiplication de la taille par la valeur 0,72 ou 0,65 (valeurs d'indice pour les hommes et les femmes), avec la touche (23) on obtient le résultat qu'on met en mémoire avec la touche B (4); en tapant le type de corpulence suivi de la touche (14) et le nombre 4,3 (hommes) ou 4,2 (femmes), on fait la multiplication du nombre 1 (corpulence mince), 2 (corpulence normale) ou 3 (corpulence forte) par le facteur 4,3 ou 4,2; le résultat est obtenu avec la touche (23); en pressant la touche (4) on additionne en mémoire le résultat obtenu; on tape le nombre 66 qu'on soustrait aux valeurs de Mémoire avec la touche C (3); ensuite on obtient sur l'affichage la valeur correspondante en pressant la touche du D (2).

## Exemple n° 2

Calcul de la ration calorique quotidienne. Elle s'effectue avec la machine à calculer de la Figure 2 avec la séquence d'opérations suivante: on allume la machine à calculer avec la touche ON; on tape le poids corporel en kilogrammes; on presse la touche rouge A (14); on presse la touche (6), (7) ou (8) qui correspond au type d'activité du sujet; on appuie sur la touche rouge A (14); on tape 15 ou 10 selon qu'il s'agisse d'un homme ou d'une femme; avec la touche triangulaire noire (23) on affiche le résultat.

La séquence d'opérations mathématiques effectuées est la suivante: après avoir allumé la machine à calculer, on multiplie le poids corporel en kilogrammes par un nombre dépendant du type d'activité du sujet (7 dans le cas d'activité légère, 8 pour une activité moyenne, 9 pour activité fatigante); ensuite on multiplie la valeur obtenue par 15 s'il s'agit d'un homme ou par 10 s'il s'agit d'une femme; au moyen de la touche noire (23) on affiche sur l'affichage le résultat du calcul.

Exemple n° 3

Calcul du poids en grammes des aliments d'une diète suivant une composition prédéterminée en pourcentage de ses composants. Il s'effectue avec la machine à calculer de la Figure 2, à travers la séquence d'opérations suivante: une fois allumée la machine à calculer avec la touche ON, on tape la ration calorique journalière et on presse la touche rouge (14); on tape le code numérique de l'aliment choisi; on presse la touche triangulaire noire (23) et on lit sur l'affichage le poids en gramme correspondant à l'aliment choisi. Ensuite, on tape le code numérique de l'aliment choisi en deuxième; on appuie sur la touche triangulaire noire (23) et on lit sur l'affichage le poids en grammes du deuxième aliment. Et ainsi de suite jusqu'au dernier des aliments. La procédure décrite prévoit la préparation d'une table fournie en même temps que la machine et contenant les valeurs précalculées (les codes numériques) caractéristiques de chaque aliment et obtenues en fonction de la diète qu'on désire suivre. Si, par exemple, les besoins calorique quotidien doivent être assurés à 10% par des protides, à 35% par des lipides et à 55% par des glucides, il est possible de déterminer à l'avance le pourcentage de participation des différents groupes d'aliments pour fournir 55% de la part des glucides (par exemple, les fruits doivent fournir 7%, les légumes 5%, les farineux 23% comme premier choix et 20% comme deuxième choix) et de la même manière les parts des autres aliments de la diète, c'est-à-dire les protéines et les lipides. Une fois les codes numériques de chaque aliment calculés, on détermine la quantité en grammes de chacun en choisissant un seul aliment pour chaque groupe (un du groupe légumes, un du groupe fruit, un du groupe céréales, un du groupe viandes et un du groupe graisses) en les élaborant suivant la procédure décrite. Cette procédure permet de calculer la quantité en grammes des différents aliments selon une composition de la diète déterminée à l'avance, en ce que les codes numériques des aliments sont calculés en fonction de cette composition. Si, au contraire, on veut calculer la quantité en grammes d'une diète variable à souhait même dans la composition en pourcentage de ses composants, il faut suivre la procédure décrite dans l'exemple suivant.

Exemple n° 4.

Calcul de la quantité en gramme des aliments d'une diète, suivant une composition en pourcentage variable à souhait. Elle s'effectue avec la machine à calculer illustrée sur la Figure 2 avec la séquence d'opérations suivante. Une fois la machine à calculer allumée avec la touche ON, on tape la ration calorique journalière; on presse la touche rouge du A (14); on tape la part glucidique en pourcentage qu'on désire attribuer au groupe légumes au moyen de la touche (10) et on note le résultat à part; on presse la touche rouge du A (14); on tape le premier code numérique de l'aliment choisi parmi les légumes; on presse la touche triangulaire noire (23), après quoi, on lit le poids en gramme de l'aliment que l'on met de côté. Ensuite, on tape le résultat obtenu en pressant précédemment la touche (10) et mis de côté; on presse la touche rouge du A (14); on tape le deuxième code numérique de l'aliment; on appuie sur la touche triangulaire noire (23); on presse la touche marron (4) du B. Ensuite, on tape la ration calorique journalière, puis on presse la touche A (14) et on tape la part glucidique en pourcentage qu'on désire attribuer au groupe des fruits au moyen de la touche (10) et on note le résultat à part; on presse la touche rouge du A (14); on tape le premier code numérique d'un aliment appartenant au groupe fruits (à composition glucidique prédominante); on presse la touche triangulaire noire (23); on note le poids en gramme qui apparaît sur l'affichage; on presse la touche rouge du A (14); on tape le deuxième code numérique de l'aliment; on appuie sur la touche orange (3) du C. On continue ainsi jusqu'à épuisement de la série glucidique des aliments. Une fois terminé le choix des aliments de la série glucidique, on tape le pourcentage de calories qu'on désire recevoir des aliments protéiques; on presse la touche marron du B (4); on appuie sur la touche grise du D (2); on lit la part en pourcentage de calories qui doivent être fournies par les protéines des aliments à composition protéique prédominante (viandes, poissons, fromages). En procédant comme précédemment au choix des aliments du groupe protéique, on détermine leur quantités en grammes et leurs reports lipidiques qui seront retirés du pourcentage lipidique de la diète. Pour les aliments du groupe lipidique, on procèdera comme dans l'exemple n° 3 du fait que ces aliments, n'ayant pas de reports, ne possèdent pas le deuxième code numérique.

Dans la procédure décrite juste avant, il est possible de choisir le pourcentage des composants de la diète car les codes numériques des différents aliments, par exemple à contenu glucidique prédominant, se réfèrent à 1% du pourcentage glucidique, par ailleurs, le deuxième code numérique de chaque élément fournit le report, lequel est essentiellement protéique pour les aliments à contenu glucidique prédominant (fruits, légumes, céréales).

La procédure calcule donc la quantité en grammes des différents aliments en tenant compte, grâce au deuxième code numérique, du fait qu'un aliment, à contenu glucidique prédominant, possède également une composante protéique et qu'un aliment, à contenu protéique prédominant, présente un report essentiellement lipidique, alors que les aliments lipidiques sont pratiquement privés de reports. Avant de passer au calcul des aliments suivant leur contenu protéique, il faut donc retirer le report protéique fourni par les glucides de la quantité en pourcentage choisie pour les protéines. De la même manière, avant de calculer les aliments lipidiques, il faut retirer du pourcentage choisi pour ce groupe le report lipidique fourni par les aliments protéiques. C'est ce qui sera effectué dans la procédure décrite dans le présent exemple.

Selon une autre forme de réalisation préférée et en référence à la figure 4 des dessins annexés, une machine à calculer pour valeurs de posologie conformément à l'innovation est constituée par une machine à calculer électronique du type utilisé habituellement pour effectuer des opérations mathématiques, dont le clavier est modifié de la manière suivante: la touche avec le symbole de la division est remplacée par une touche (28) de couleur verte, sans inscription ni symbole; la touche portant le symbole de la multiplication est remplacée par une touche (33) de couleur rouge, sans inscription ni symbole.

Quelques exemples d'utilisation pratique seront décrits ci-après, en référence à la fig. 4 des dessins annexés.

## Exemple n° 5.

Calcul de la dose d'aliment artificiel par repas. Il s'effectue au moyen de la séquence d'opérations suivantes. Après avoir allumé la machine à calculer au moyen de la touche 34, on tape le poids corporel en kilogrammes; on presse la touche rouge (33); on tape le Quotient Energétique désiré; on presse la touche verte (28); on tape le nombre de repas par jour; on presse la touche rouge (33); on tape le code numérique de l'aliment désiré qui correspond à la quantité d'aliment nécessaire pour produire une calorie; on presse la touche verte (28); et on lit sur l'affichage le résultat cherché.

## Exemple n° 6.

Calcul de la quantité d'une certaine substance, ou de la quantité de calories contenue dans une certaine quantité d'un aliment. Il s'effectue au moyen de la séquence d'opérations suivantes. Après avoir allumé la machine à calculer au moyen de la touche (34), on tape la quantité en grammes de l'aliment présélectionné; on presse la touche rouge (33); on tape le code numérique correspondant à la substance dont on désire connaître la quantité contenue dans la quantité en gramme de l'aliment; on presse la touche verte (28) ou la touche rouge (33), et on lit sur l'affichage la valeur correspondante recherchée. Le code numérique précité représente la quantité de la substance ou la quantité de calories contenue dans l'unité de mesure de l'aliment considéré. Il est également possible d'effectuer l'opération à l'envers, c'est-à-dire de diviser par l'inverse du code numérique précité et donc, après avoir pressé la touche rouge (33) et la verte (28), de lire sur l'affichage le résultat qui est égal à celui obtenu précédemment.

De la même manière, on peut calculer la quantité d'un aliment qui contient une certaine quantité d'une substance prédéterminée ou son contenu en calories; dans ce cas la séquence d'opérations est la suivante. Après avoir allumé la machine à calculer, on tape la quantité de substance prédéterminée, on presse la touche verte (28), on tape le code numérique de l'aliment qui contient la substance, on presse la touche verte (28) ou la touche rouge (33), et on lit sur l'affichage le résultat recherché. De la même manière, on peut multiplier par l'inverse du code numérique et si on presse la touche violette (40), on peut taper les différents inverses des codes numériques et obtenir avec la touche violette (40) le résultat immédiat sans avoir à effectuer aucune autre opération.

## Exemple n° 7.

Calcul de conversion ou de transformation de quantités d'un aliment contenant une certaine dose d'une substance donnée, avec la quantité d'un autre aliment qui contient la même dose de substance et donc qui lui est équivalent. Il s'effectue au moyen de la série d'opérations suivantes. Après avoir allumé la machine à calculer avec la touche ON (34), on tape la quantité du premier aliment; on presse la touche rouge (33); on tape le code numérique du premier aliment; on presse la touche verte (28); on tape le code numérique de l'aliment avec lequel on entend remplacer le premier; on presse la touche rouge (33), la touche verte (28) ou la touche violette (40); et on lit sur l'affichage le résultat recherché.

## Revendications

1) Machine à calculer pour valeurs de posologie, tels que médimaments, compositions d'aliments, composition de diètes, indices et équivalents pour usage médical et similaires, comprenant une machine à calculer électronique à usage mathématique caractérisée en ce qu'elle comporte des touches conformées de manière telle que, de par leur forme, leur couleur et leur symbole, elles permettent d'effectuer des séquences de calcul prédéterminées, en relation avec le type de valeur à calculer, sans tenir compte des opérations mathématiques nécessaires.

2) Machine à calculer pour valeurs de posologie selon la revendication 1, caractérisée en ce que certaines de ses touches ont un contour de figure géométrique plane, telle qu'un triangle, un cercle, une ellipse et similaires, et se différencient entre elles par la fonction qu'elles représentent, et afin de permettre une identification immédiate.

3) Machine à calculer pour valeurs de posologie selon la revendication 1, caractérisée en ce que certaines de ses touches ont une couleur, telle que jaune, touge, verte et similaires et se différencient entre elles par la fonction qu'elles représentent, afin de permettre une identification immédiate.

4) Machine à calculer pour valeurs de posologie selon la revendication 1, caractérisée en ce que une ou plusieurs de ses touches sont pourvues, en plus du symbole numérique et/ou mathématique habituel, d'au-moins une inscription telle que "age", "sexe", "type d'activité", "type de corpulence", "cholestérol, sodium, calcium, phosphore, fer, calories, indice cholestérolique, glycémiant, athérogénétique, dyslipémique, hyperazotémique, d'uricémie, glucidique, protéique, lipidique" etc., en relation avec la séquence de calcul à effectuer et avec le type de valeur à déterminer.

**Fig. 1**

**Fig. 2**

| 7 | 8 | 9 | ÷ |
| C | = | 4 | 5 | 6 | X |
| ON/C | 0 | 1 | 2 | 3 | • |

**Fig. 3**

| 7 (25) | 8 (26) | 9 (27) | (28) |
| C (29) | = (40) | 4 (30) | 5 (31) | 6 (32) | (33) |
| ON/C (34) | 0 (35) | 1 (36) | 2 (37) | 3 (38) | • (39) |

**Fig. 4**

Office européen
des brevets

**RAPPORT DE RECHERCHE EUROPEENNE**

Numero de la demande

EP 91 83 0080

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-U-8 809 177 (MECHATRONIC) * Page 1, lignes 1-2,18-26; page 4, lignes 29-33; pages 5-9, entières; figures 1,4-7 * | 1,4 | G 06 F 15/02 |
| Y | | 2,3 | |
| | --- | | |
| Y | FR-A-2 468 160 (FRATELLI BORLETTI) * Page 1, lignes 1-3; page 2, lignes 14-18; page 5, lignes 9-14,25-29; revendications 4-7 * | 2,3 | |
| | --- | | |
| A | US-A-4 807 170 (JOHN KULLI) | | |
| | ----- | | |

**DOMAINES TECHNIQUES RECHERCHES (Int. Cl.5)**

G 06 F 15/02

Le présent rapport a été établi pour toutes les revendications

| Lieu de la recherche | Date d'achèvement de la recherche | Examinateur |
|---|---|---|
| LA HAYE | 22-05-1991 | GONZALEZ ORDONEZ O. |

EPO FORM 1503 03.82 (P0402)